# EUROPÄISCHE PATENTSCHRIFT

(11) **EP 1 483 514 B1**
(45) Veröffentlichungstag und Bekanntmachung des Hinweises auf die Patenterteilung: **05.07.2006**
(21) Anmeldenummer: 03811724.8
(22) Anmeldetag: 23.11.2003
(51) Int. Cl.: F16C 3/08, F16C 3/14

(54) **GEGOSSENE KURBELWELLE**
CAST CRANKSHAFT
VILEBREQUIN COULE

(30) Priorität: 26.11.2002 DE 10254951
(43) Veröffentlichungstag der Anmeldung: 08.12.2004
(73) Patentinhaber: R.A.E.-GmbH, 65428 Rüsselsheim (DE)
(72) Erfinder: HENKEL, Horst, 35232 Dautphetal-Friedensdorf (DE)
(74) Vertreter: Wolf, Günter
(86) Internationale Anmeldenummer: PCT/DE2003/003874
(87) Internationale Veröffentlichungsnummer: WO 2004/048790

(56) Entgegenhaltungen:
- CH-A- 186 905
- DE-A- 4 239 691
- DE-B- 1 216 030
- DE-C- 714 558
- DE-C- 19 536 349
- GB-A- 481 928
- GB-A- 644 841
- GB-A- 2 172 691
- US-A- 4 534 241
- PATENT ABSTRACTS OF JAPAN vol. 005, no. 199 (M-102), 17. Dezember 1981 (1981-12-17) & JP 56 117863 A (TOYOTA MOTOR CORP), 16. September 1981 (1981-09-16)
- PATENT ABSTRACTS OF JAPAN vol. 006, no. 010 (M-107), 21. Januar 1982 (1982-01-21) & JP 56 131823 A (KUBOTA LTD), 15. Oktober 1981 (1981-10-15)

## Beschreibung

Die Erfindung betrifft eine gegossene Kurbelwelle mit Kurbelwellen-Lagerzapfen, Pleuel-Lagerzapfen, Kurbelwangen und Ölkanälen, die jeweils vom Außenumfang eines Kurbelwellen-Lagerzapfens zum Außenumfang eines Pleuel-Lagerzapfens verlaufen und der Lagerschmierung dienen, wobei die Kurbelwelle im Lost Foam Verfahren hohlgegossen ist.

Kurbelwellen sind wesentlicher Bestandteil von Maschinen (z.B. PKW- und LKW-Fahrzeugmotoren, Schiffsmotoren, stationären Motoren usw.). Eine Kurbelwelle weist dabei Kurbelwellen-Lagerzapfen auf, die der Lagerung der Kurbelwelle in Wellenlagern dienen. Ferner umfaßt sie Pleuel-Lagerzapfen für die Lagerung von Pleuelstangen in Pleuellagern. Zur Schmierung der Pleuellager sind Ölkanäle vorgesehen, die sich jeweils vom Außenumfang eines Kurbelwellen-Lagerzapfens zum Außenumfang eines Pleuel-Lagerzapfens erstrecken, also durch den Wellenkörper verlaufen. Das den Wellenlagern in bekannter Weise über eine zentrale Ölversorgung jeweils zugeführte Schmiermittel wird bei Rotation der Kurbelwelle an das Pleuellager, mit dem das jeweilige Wellenlager über den betreffenden Ölkanal verbunden ist, weitergeleitet.

Kurbelwellen sind aufgrund der sich beim Maschinenbetrieb zeitlich und örtlich stark ändernden Kräfte, Dreh- und Biegemonente und der daraus resultierenden Schwingungen sehr starken Belastungen ausgesetzt. Daher werden solche Wellen überwiegend massiv gefertigt, und zwar werden hochbelastete Wellen als Schmiedeteile aus z.B. Stahl ausgeführt und geringer belastete Wellen aus Stahl oder Gußeisen geeigneter Wahl gegossen. Die Ölkanäle, die jeweils zwischen einem Kurbelwellen-Lagerzapfen und einem Pleuel-Lagerzapfen verlaufen, werden nachträglich in den Wellenkörper eingebracht, i.d.R. gebohrt. Nachteilig bei den massiven Kurbelwellen sind das sich auf den Kraftstoffverbrauch der Motoren negativ auswirkende hohe Gewicht der Wellen und die kostenintensive Fertigung bei den geschmiedeten Wellen. Das nachträgliche Einbringen der Ölkanäle birgt darüber hinaus die Gefahr, daß Bohrrückstände in der Kurbelwelle verbleiben, was zu einer Schädigung des Motors führen kann.

Zur Gewichtsreduktion sind beispielsweise aus der DE 42 39 691 A1 und der DE 195 36 349 C1 hohl ausgeführte Kurbelwellen bekannt, die aus einzelnen Platten und Rohren bzw. aus mehreren Segmenten zusammengesetzt (verschweißt) sind. Die Ölkanäle sind in Form von eingelegten Rohren oder in Form von in die Segmente eingebrachten Öffnungen realisiert. Derartige Wellen sind aufwendig in der Herstellung sowie relativ instabil und daher nicht für höhere Belastungen geeignet.

Die CH-A-186 905 zeigt eine hohlgegossene Kurbelwelle ohne Ölkanäle. Zur Verbesserung der Stabilität wird vorgeschlagen, daß die Kurbelwelle entsprechend den verschieden großen äußeren Krafteinwirkungen verschieden große Wandstärken bzw. exzentrische Hohlräume aufweist. Zusätzlich können zur Versteifung eine oder mehrere längs und/oder senkrecht zur Kurbelwellenlängsachse verlaufende Rippen vorhanden sein.

Die GB-A 2 172 691 offenbart eine im Lost Foam Verfahren gegossene Kurbelwelle mit Kurbelwellen-Lagerzapfen, Pleuel-Lagerzapfen, Kurbelwangen, ölkanälen, die jeweils vom Außenumfang eines Kurbelwellen-Lagerzapfens zum Außenumfang eines Pleuel-Lagerzapfens verlaufen und der Lagerschmierung dienen, und einem Hohlraum. Die Kurbelwelle ist im Innern komplett freigespart, indem ein entsprechend der Welle geformtes, hohles Einlegeteil aus Metall oder Keramik beim Gießen mit eingegossen ist. Eine derartige Welle ist arbeits- und kostenaufwendig in der Herstellung, da für jede Welle ein gesondert anzufertigendes Einlegeteil benötigt wird, das präzise in das für das Lost Foam Verfahren erforderliche Schaumstoffmodell einzubetten ist. Ferner ist dadurch, daß die Kurbelwelle einen komplett freigesparten Hohlraum aufweist, nicht gewährleistet, daß sie auf Dauer den beim Maschinenbetrieb auftretenden mechanischen Kräften Stand hält.

Der Erfindung liegt die Aufgabe zugrunde, eine hohlgegossene Kurbelwelle mit hoher mechanischer Stabilität zu schaffen, die in Brennkraftmaschinen einsetzbar ist, sowie ein Verfahren für die Herstellung einer derartigen Kurbelwelle bereitzustellen.

Diese Aufgabe wird bei einer Kurbelwelle der eingangs genannten Art erfindungsgemäß gelöst durch die kennzeichnenden Merkmale des Anspruches 1.

Dadurch, daß die erfindungsgemäße Kurbelwelle hohlgegossen ist (Hohlwelle), d.h. einen Hohlraum aufweist, der aufgrund besonderer gießtechnischer Maßnahmen freigespart ist, läßt sich eine hohe Gewichtsreduktion erreichen, was sich vorteilhaft auf den Kraftstoffverbrauch der Maschine auswirkt.

Beim Maschinenbetrieb ist die Kurbelwelle starken mechanischen Belastungen ausgesetzt, wie z.B. Drehmonenten, Torsionskräften, Biegekräften, Biegewechselspannungen und anderen Spannungen, Schwingungen, Drehschwingungen usw.. Durch das in dem freigesparten Hohlraum vorgesehene, mindestens eine erfindungsgemäße Versteifungselement wird erreicht, daß trotz der hohlen Ausführung der Kurbelwelle die für den Wellenbetrieb in einem Motor erforderliche mechanische Stabilität bzw. Belastbarkeit der Kurbelwelle, insbesondere die Torsions- und Biegesteifigkeit der Kurbelwelle, gegeben ist. Beispielsweise kann es sich im Falle eines einzigen Versteifungselementes um eine Verstrebung, Rippe, Wand oder dergleichen handeln, die den Hohlraum in Längserstreckung der Kurbelwelle durchzieht. Vorzugsweise sind in dem Hohlraum mehrere Versteifungselemente vorgesehen. Diese können vorteilhafterweise in Form von Rippen, Stegen, Streben, Wänden, Wandelementen oder dergleichen ausgebildet sein. Anzahl, Art, Ausbildung und Anordnung der Versteifungselemente hängen dabei von den konkreten Einsatzbelastungen der jeweiligen Kurbelwelle ab, z.B. von der Zylinderzahl und Maschinenart, und lassen sich durch FE-Berechnungen, d.h. Berechnungen nach der Finite-Elemente-Methode, ermitteln.

In einem zentralen Versteifungselement verläuft ein Ölkanal, der den Außenumfang eines Kurbelwellen-Lagerzapfens mit dem Außenumfang eines Pleuel-Lagerzapfens verbindet und der Lagerschmierung dient.

Die Herstellung einer hohlen Kurbelwelle mit einem oder mehreren eingegossenen Versteifungselement(en) wird erst durch das erfindungsgemäß eingesetzte Lost Foam Gießverfahren (eine Technik des Vollformgießens) ermöglicht, da diese Technik eine komplexe Hohlraumgestaltung erlaubt. Dafür wird ein verlorenes Modell aus leichtem Schaumstoff (sogenannter Schäumling) erstellt, das der zu fertigenden Kurbelwelle in äußerer und innerer Form, Innenaufbau und Maß im wesentlichen entspricht, d.h. das Schaumstoffmodell weist einen entsprechend der späteren Kurbelwelle gestalteten Hohlraum mit Versteifungselement(en) auf. Zur Oberflächenglättung wird eine Beschichtung auf das Schaumstoffmodell aufgebracht, das anschließend in das Formmedium (binderfreien Formsand, feinkörnigen Stahlkies oder dergleichen) eingebettet wird. Auch der spätere Hohlraum der Kurbelwelle wird mit dem Formmedium über vorgesehene Öffnungen gefüllt. Beim Gießen vergast der Schaumstoff durch die Hitze der Schmelze und hinterläßt einen Hohlraum, der durch das Metall, vorzugsweise Stahlguß (aber auch andere Materialien sind möglich), gefüllt wird. Nach dem Abkühlen wird das äußere Formmedium entfernt und der Hohlraum der Kurbelwelle über die vorgesehenen Öffnungen problemlos und im Prinzip vollkommen rückstandsfrei entleert.

Im Unterschied zu herkömmlichen Gießverfahren sind beim Lost Foam Verfahren keine aufwendigen Gießkerne erforderlich, und das Formmedium ist recyclebar. Nach dem Entfernen des Formmediums ist nur noch ein geringer Nachbearbeitungsaufwand (z.B. Putz- und Strahlaufwand) an der Kurbelwelle nötig, da nur sehr schwache Teilungs- und keine Kerngrate vorhanden sind, das Lost Foam Verfahren eine hohe Oberflächenqualität, hochwertige Konturschärfe und große Abbildungsgenauigkeit bietet sowie erforderliche Bearbeitungszugaben deutlich verringert sind. Ferner ist eine engere Fertigungstoleranz um ca. 30% erzielbar.

Ein weiterer wichtiger technischer Vorteil ist die bei einer Hohlwelle durch das Lost Foam Gießverfahren erreichbare hohe Gewichtsreduzierung, da gießtechnisch nur geringe Mindestwandstärken erforderlich sind und sich die Kontur des Hohlraumes sowie die Ausbildung und Anordnung des mindestens einen Versteifungselementes sehr genau vorgeben lassen.

Vorzugsweise ist das mindestens eine Versteifungselement einstückig mit der Kurbelwelle ausgebildet, d.h. es ist zusammen mit der Kurbelwelle in demselben Arbeitsschritt gegossen, besteht also aus demselben Gußmaterial wie die Kurbelwelle. Dadurch läßt sich auf verfahrenstechnisch relativ einfache Art und Weise eine große Stabilitätserhöhung realisieren. Alternativ könnte ein vorgefertigtes Versteifungselement bzw. könnten mehrere vorgefertigte Versteifungselemente gleichen oder anderen Materials als die Kurbelwelle in das Schaumstoffmodell eingearbeitet und beim Gießen mit in die Kurbelwelle eingegossen werden. Diese Möglichkeit ist jedoch weniger bevorzugt, da dadurch die Stabilitätserhöhung geringer ausfällt.

Versteifungselemente können bevorzugt in den Bereichen von Pleuel-Lagerzapfen vorgesehen sein, um die Kräfte und Spannungen, die aus den Zünddrücken der Zylinder resultieren, abzufangen. Dabei kann/können pro Pleuel-Lagerzapfen ein oder mehrere Versteifungselement(e) vorgesehen sein.

Alternativ oder zusätzlich können Versteifungselemente vorteilhafterweise in den Bereichen von Kurbelwangen vorgesehen sein, wobei der Begriff "Kurbelwange" im Rahmen der Erfindung auch die Schwungmassen bzw. den Massenausgleich einer Kurbelwelle umfaßt. Dabei kann/können pro Kurbelwange ein oder mehrere Versteifungselement(e) vorgesehen sein.

Weiterhin alternativ oder zusätzlich können Versteifungselemente vorzugsweise in den Bereichen von Kurbelwellen-Lagerzapfen vorgesehen sein, um insbesondere die Torsions- und Biegesteifigkeit der Kurbelwelle in den Bereichen der Wellenlager zu erhöhen. Dabei kann/können pro Kurbelwellen-Lagerzapfen ein oder mehrere Versteifungselement(e) vorgesehen sein.

Selbstverständlich ist es auch möglich, beispielsweise einen stärker belasteten Kurbelwellen-Lagerzapfen zu versteifen und einen weniger belasteten Kurbelwellen-Lagerzapfen unversteift zu lassen. Vergleichbares gilt für Kurbelwangen und Pleuel-Lagerzapfen.

Gemäß einer vorteilhaften Ausführung der Erfindung sind die jeweils in einem Versteifungselement verlaufenden Ölkanäle nachträglich in die gegossene Kurbelwelle eingebracht, z.B. gebohrt. Derartige Ölkanäle können relativ schmal ausgeführt sein, so daß die betreffenden Versteifungselemente bzw. das betreffende durchgängige Versteifungselement (in dem also mehrere Ölkanäle verlaufen) ebenfalls eine relativ geringe Breite aufweisen können/kann, was sich vorteilhaft auf die Reduktion des Kurbelwellengewichts auswirkt.

Gemäß einer alternativen, vorteilhaften Weiterbildung der Erfindung sind die Ölkanäle in Form von bei der Kurbelwellenherstellung eingegossenen Röhrchen ausgebildet. Derartige Röhrchen werden einfach bei der Herstellung des Schaumstoffmodells an entsprechenden Stellen eingearbeitet und somit beim Gießen mit eingegossen. Ein derartiges Einbringen der Ölkanäle ist verfahrenstechnisch einfacher zu realisieren als ein nachträgliches Einbringen der Ölkanäle, und es fallen keine Bohrrückstände an.

Gemäß einer weiteren alternativen, vorteilhaften Ausführung der Erfindung handelt es sich bei den Ölkanälen um bei der Kurbelwellenherstellung eingegossene Hohlräume, d.h. die Ölkanäle werden jeweils als Hohlraum gegossen und sind mit dem Material umgeben, aus dem die Kurbelwelle gegossen ist. Dadurch lassen sich die Ölkanäle unaufwendig in einem Arbeitsschritt mit einarbeiten. Auch hier fallen keine Bohrrückstände an. Verfahrenstechnisch läßt sich diese Variante vorteilhafterweise dadurch realisieren, daß die Ölbohrungen durch in das Schaumstoffmodell integrierte Kerne (z.B. Sandkerne) mit höherer Biegefestigkeit, die den Auftriebskräften des schmelzflüssigen Gußmaterials standhalten, eingebracht werden.

Ferner wird die oben genannte Aufgabe erfindungsgemäß gelöst durch ein Verfahren zur Herstellung einer erfindungsgemäßen, im Lost Foam Verfahren hohlgegossenen Kurbelwelle nach einem der Ansprüche 1 bis 12 mit den im kennzeichnenden Teil des Anspruches 13 angegebenen Merkmalen.

Um die äußere und innere Form sowie den Innenaufbau der späteren Kurbelwelle am Schaumstoffmodell genau vorgeben zu können, wird das Schaumstoffmodell aus mehreren, zweckmäßig gewählten und geformten Segmenten zusammengesetzt und diese fest miteinander verbunden, z.B. durch Verkleben oder thermisches Fügen (Verschweißen oder dergleichen). Die einzelnen Segmente des Schaumstoffmodells werden derart gewählt, daß sie unaufwendig mit relativ einfachen Werkzeugen hergestellt werden können und sich die Form und Hohlraumgestaltung der späteren Kurbelwelle gut ausbilden lassen. Die sich nach der Herstellung des Schaumstoffmodells anschließenden verfahrenstechnischen Schritte des Lost Foam Gießverfahrens sind oben bereits beschrieben worden.

Um komplexe Hohlraumformen zu realisieren, kann es vorteilhaft sein, wenn das Schaumstoffmodell in Kurbelwellenlängserstreckung aus mehreren, hintereinander angeordneten Segmenten zusammengesetzt wird, d.h. das Schaumstoffmodell ist senkrecht zur Kurbelwellenlängserstreckung in einzelne Segmente untergliedert. Beispielsweise können die Schaumstoffsegmente für die Kurbelwangen senkrecht zur Kurbelwellenlängserstreckung geteilt ausgebildet sein, so daß der Wangenhohlraum mit dem anschließenden Pleuel- bzw. Kurbelwellen-Lagerzapfenhohlraum zugänglich ist und ein oder mehrere Versteifungselement(e) dort ausgebildet werden können.

Für das Vorsehen von Ölkanälen in der Kurbelwelle gibt es mehrere Möglichkeiten: Für spätere Ölkanäle können gemäß einer ersten vorteilhaften Variante am Schaumstoffmodell entsprechende Hohlräume ausgespart werden (bevorzugt durch Einformen von Kernen in das Modell, siehe oben). In einer zweiten vorteilhaften Variante können für die späteren Ölkanäle an entsprechenden Stellen in das Schaumstoffmodell Röhrchen eingearbeitet werden, die beim Gießen der Welle mit eingegossen werden. In einer dritten vorteilhaften Variante werden die Ölkanäle in die gegossene Kurbelwelle eingebracht, z.B. gebohrt.

In den Zeichnungen ist exemplarisch ein Ausführungsbeispiel einer erfindungsgemäßen Kurbelwelle dargestellt. Es zeigen:
- Fig. 1: eine nur ausschnittsweise dargestellte Seitenansicht einer erfindungsgemäßen Kurbelwelle,
- Fig. 2: einen Querschnitt im Bereich eines Kurbelwellen-Lagerzapfens entsprechend A-A' aus Fig. 1,
- Fig. 3: einen Querschnitt im Bereich eines Pleuel-Lagerzapfens entsprechend B-B' aus Fig. 1,
- Fig. 4: einen Querschnitt im Bereich einer Kurbelwange entsprechend C-C' aus Fig. 1 und
- Fig. 5: einen Längsschnitt durch den Ausschnitt aus Fig. 1.

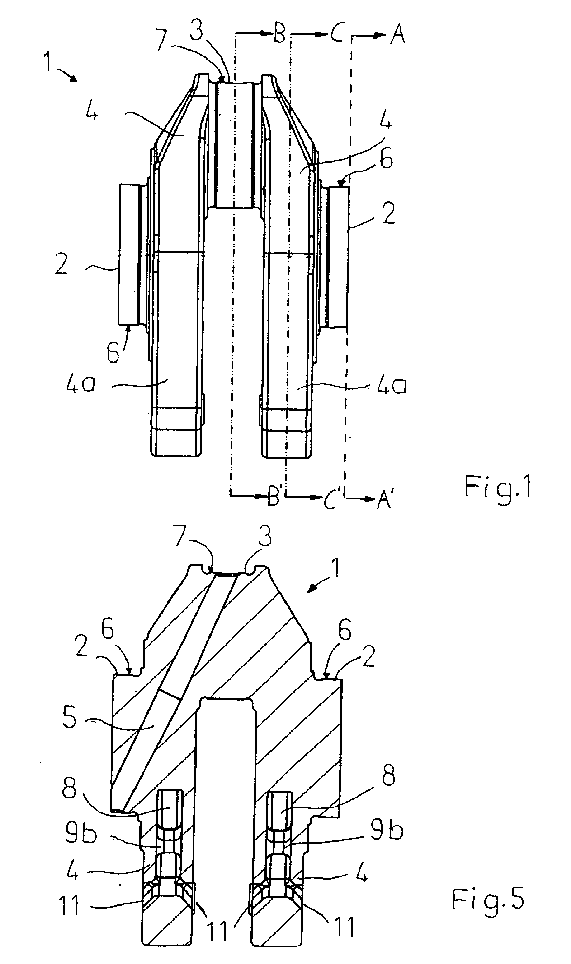

Die in den Fig. 1 bis 5 ausschnittsweise dargestellte gegossene' Kurbelwelle 1 weist Kurbelwellen-Lagerzapfen 2 für die Lagerung der Kurbelwelle 1 in Wellenlagern, Pleuel-Lagerzapfen 3 für die Lagerung von Pleuelstangen in Pleuellagern, Kurbelwangen 4 und Ölkanäle 5 auf. Die Ölkanäle 5 verlaufen jeweils vom Außenumfang 6 eines Kurbelwellen-Lagerzapfens 2 zum Außenumfang 7 eines Pleuel-Lagerzapfens 3 (siehe Fig. 5) und dienen der Lagerschmierung.

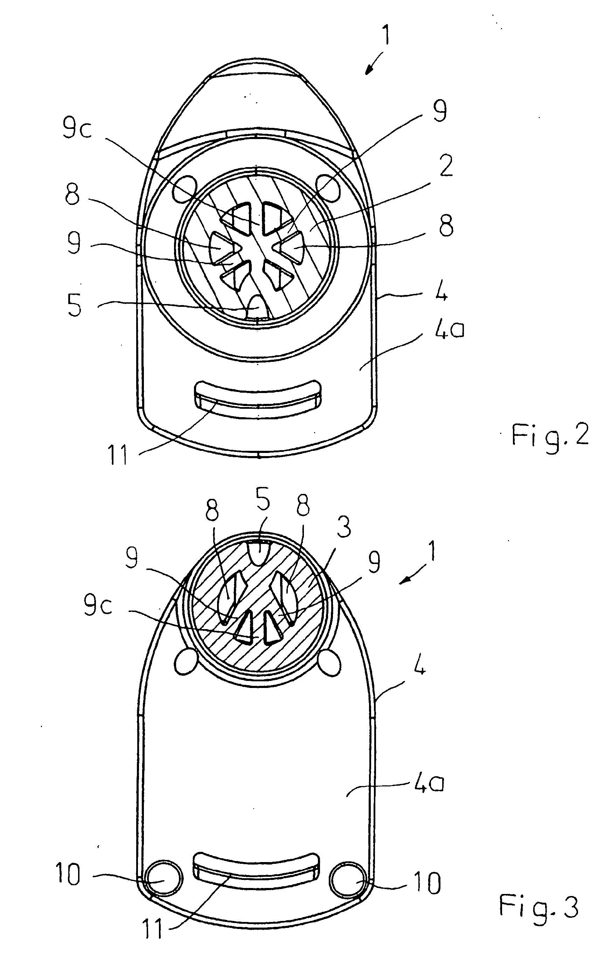

Die Kurbelwelle 1 ist im Lost Foam Verfahren hohlgegossen und weist, wie insbesondere in den Fig. 2 bis 4 zu erkennen ist, einen Hohlraum 8 auf, in dem mindestens ein Versteifungselement 9 vorgesehen ist. Im dargestellten Ausführungsbeispiel sind mehrere einstückig mit der Kurbelwelle 1 ausgebildete Versteifungselemente 9 vorhanden. Diese dienen der Erhöhung der mechanischen Belastbarkeit der Kurbelwelle 1, insbesondere der Erhöhung der Torsions- und Biegesteifigkeit. Der Hohlraum 8 erstreckt sich über Kurbelwellen-Lagerzapfen 2, Kurbelwangen 4 und Pleuel-Lagerzapfen 3 und wird von den Versteifungselementen 9 untergliedert.

In Fig. 2 sind Versteifungselemente 9 im Bereich eines Kurbelwellen-Lagerzapfens 2 zu erkennen. Diese sind hier wandartig ausgebildet und verlaufen von einer Seite der Hohlraumwandung zur gegenüberliegenden Seite der Hohlraumwandung, so daß im Querschnitt ein speichenartiges Muster entsteht. Ferner ist hier ein Ölkanal 5 angeschnitten, der in den Außenumfang 6 des Kurbelwellen-Lagerzapfens 2 mündet.

Wie in Fig. 3 zu erkennen ist, sind bei dem Ausführungsbeispiel auch in den Bereichen von Pleuel-Lagerzapfen 3 Versteifungselemente 9 vorgesehen, die hier derart ausgebildet und angeordnet sind, daß im Querschnitt eine gabelartige, sich in Richtung der Schwungmasse 4a der Kurbelwange 4 verbreiternde Anordnung gebildet wird. Der hier angeschnittene Ölkanal 5 mündet in den Außenumfang 7 des Pleuel-Lagerzapfens 3. Bei den beiden im Bereich der Schwungmasse 4a zu erkennenden runden Elementen handelt es sich um die Reste von Gießstegen 10 (gießtechnischen Hilfsstrukturen), über die benachbarte Kurbelwangen 4 während des Herstellungsprozesses miteinander verbunden gewesen sind. Derartige Gießstege 10 werden am Schaumstoffmodell ausgebildet, um die Stabilität der Kurbelwelle 1 bei der Einbettung in das Formmedium und beim Gießen zu erhöhen und dienen zugleich als Fließbrücke für das heiße Gußmaterial. Nach dem Gießen werden diese gießtechnischen Hilfsstrukturen entfernt.

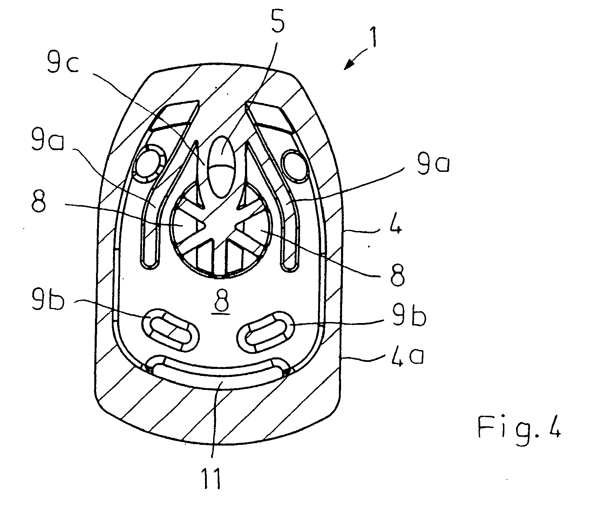

Die in den Bereichen der Pleuel-Lagerzapfen 3 ausgebildeten Versteifungselemente 9 setzen sich in dem dargestellten Ausführungsbeispiel als Rippen 9a bis in den in den Kurbelwangen jeweils vorhandenen Hohlraum 8 fort, was in Fig. 4 zu erkennen ist. Auch in Fig. 4 ist der geschnittene Ölkanal 5 zu sehen. Ferner sind im Hohlraum 8 in der Kurbelwange 4 stegartige Versteifungselemente 9b vorhanden (siehe auch Fig. 5), die in den Bereichen der Schwungmassen 4a der Kurbelwangen 4 für eine Abstützung und damit für eine Stabilitätserhöhung sorgen. Ferner ist in Fig. 4 eine hier schlitzartige Öffnung 11 (selbstverständlich sind auch andere Formen möglich) in der Schwungmasse 4a der Kurbelwange 4 zu erkennen. Eine solche Öffnung 11 ist hier an beiden Seiten einer Kurbelwange 4 vorgesehen (vgl. auch Fig. 5). Die Öffnungen 11 stellen jeweils eine Verbindung des Hohlraumes 8 nach außen dar und erleichtern bei der Herstellung der Kurbelwelle 1 das Befüllen des Hohlraumes mit bzw. die im Prinzip rückstandsfreie Entleerung des Hohlraumes 8 von Formmedium. Es handelt sich bei den Öffnungen 11 somit ebenfalls um gießtechnische Hilfsstrukturen.

Die Öffnungen 11 in den Schwungmassen 4a sind vorteilhaft derart ausgebildet und angeordnet, daß im Motorbetrieb kein Öl in den Hohlraum 8 der Kurbelwelle 1 gelangen kann bzw. eingedrungenes Öl durch die auftretenden rotationsbedingten Fliehkräfte wieder herausgeschleudert wird. Bis auf die Öffnungen 11 in den Schwungmassen 4a, die Öffnungen für Ölkanäle 5 und Öffnungen an den Stirnseiten der Kurbelwelle weist die Kurbelwelle 1 im Ausführungsbeispiel eine geschlossene Außenkontur auf. Dies ist vorteilhaft, da beim Motorbetrieb folglich insgesamt kein Öl ins Innere der Kurbelwelle 1 gelangen, sich dort sammeln und somit zu einer Unwucht der Kurbelwelle 1 führen kann. Außerden wird durch die geschlossene Außenkontur eine hohe Stabilität der Kurbelwelle 1 erzielt.

Wie aus einer gemeinsamen Betrachtung der Fig. 1 bis 5 ersichtlich, ist in dem gezeigten Kurbelwellenausschnitt ein zentrales Versteifungselement 9c (das in Fig. 5 längs geschnitten ist) über den Hohlraum 8 von Kurbelwellen-Lagerzapfen 2, Kurbelwangen 4 und Pleuel-Lagerzapfen 3 hinweg durchgängig ausgebildet, während andere Versteifungselemente 9 lokal auf einen Bereich (Kurbelwellen-Lagerzapfen-, Pleuel-Lagerzapfen- bzw. Kurbelwangen-Bereich) beschränkt sind.

Die nicht abgebildeten Abschnitte der Kurbelwelle 1 sind vorzugsweise entsprechend ausgebildet. Dem zentralen, als Wand ausgebildeten Versteifungselement 9c kommt eine große Bedeutung für die Erhöhung der Torsions- und Biegesteifigkeit der Kurbelwelle 1 zu. Durch die Ausbildung und Anordnung des zentralen Versteifungselementes 9c wird beim Motorbetrieb ein gezielter Kraftfluß bewirkt, der von dem Pleuel-Lagerzapfen 3 die Belastungen, die aus den Zünddrücken des dem Zapfen zugeordneten Zylinders resultieren, abführt.

Der Längsschnitt in Fig. 5 verläuft durch das zentrale Versteifungselement 9c. Gut zu erkennen ist, daß der abgebildete Ölkanal 5 hier im zentralen versteifungselement 9c verläuft, bei der Kurbelwellenherstellung als Hohlraum mit eingegossen worden ist und den Außenumfang 6 eines Kurbelwellen-Lagerzapfens 2 mit dem Außenumfang 7 eines Pleuel-Lagerzapfens 3 verbindet, so daß im Bereich des Wellenlagers in bekannter Weise extern zugeführtes Schmiermittel auch zu dem Pleuellager gelangen kann und dessen Schmierung sicherstellt. Der Ölkanal 5 verläuft in dem dargestellten konkreten Ausführungsbeispiel geradlinig. Selbstverständlich sind auch weniger geradlinige bis hin zu abgewinkelten Ölkanälen 5 möglich. Ebenfalls zu sehen sind die stegartigen Versteifungselemente 9b sowie die schlitzartigen Öffnungen 11 in den Bereichen der Schwungmassen 4a der Kurbelwangen 4.

Selbstverständlich kann der Ölkanal 5 auch anders eingebracht sein, z.B. nachträglich mechanisch (z.B. gebohrt) oder in Form eines eingegossenen Röhrchens.

Die Erfindung wurde in dem Ausführungsbeispiel exemplarisch anhand einer Kurbelwelle 1 beschrieben, die aufgrund der Art, Anzahl, Ausbildung und Anordnung ihrer Versteifungselemente 9 für einen Sechszylinder-Motor geeignet ist. Dabei handelt es sich jedoch nur um eine konkrete Möglichkeit, um für einen derartigen Motor die erforderliche Stabilität seiner Kurbelwelle 1 zu erhalten. Auch andere Variationen von Anzahl, Art, Ausbildung und Anordnung von Versteifungselementen 9 können zum gleichen Erfolg führen. Desweiteren können bei einer Kurbelwelle 1 für einen Motor mit einer anderen Zylinderzahl Art, Anzahl, Ausbildung und Anordnung der Versteifungselemente 9 selbstverständlich anders gewählt werden. Diese Faktoren lassen sich durch FE-Berechnungen ermitteln.

### Bezugszeichenliste

- 1: Kurbelwelle
- 2: Kurbelwellen-Lagerzapfen
- 3: Pleuel-Lagerzapfen
- 4: Kurbelwange
4a Schwungmasse
- 5: Ölkanal
- 6: Außenumfang von 2
- 7: Außenumfang von 3
- 8: Hohlraum
- 9: Versteifungselement
9a Rippe
9b stegartiges Versteifungselement
9c zentrales Versteifungselement
- 10: Gießsteg
- 11: Öffnung

## Patentansprüche

1. Gegossene Kurbelwelle mit Kurbelwellen-Lagerzapfen (2), Pleuel-Lagerzapfen (3), Kurbelwangen (4) und Ölkanälen (5), die jeweils vom Außenumfang (6) eines Kurbelwellen-Lagerzapfens (2) zum Außenumfang (7) eines Pleuel-Lagerzapfens (3) verlaufen und der Lagerschmierung dienen, wobei die Kurbelwelle (1) im Lost Foam Verfahren hohlgegossen ist und einen Hohlraum (8) aufweist,
**dadurch gekennzeichnet,**
**daß** in dem Hohlraum (8) mindestens ein Versteifungselement (9) vorgesehen ist, um die mechanische Belastbarkeit, insbesondere die Torsions- und Biegesteifigkeit, der Kurbelwelle (1) zu erhöhen, wobei mindestens ein Versteifungselement (9) ein zentrales Versteifungselement (9c) bildet, das in einem Hohlraum (8), der sich über einen Kurbelwellen-Lagerzapfen (2), Kurbelwangen (4) und einen Pleuel-Lagerzapfen (3) erstreckt, durchgängig ausgebildet ist, und wobei ein Ölkanal (5) in dem mindestens einen zentralen Versteifungelement (9c) verläuft.

2. Gegossene Kurbelwelle nach Anspruch 1,
**dadurch gekennzeichnet,**
**daß** das mindestens eine Versteifungselement (9) einstückig mit der Kurbelwelle (1) ausgebildet ist.

3. Gegossene Kurbelwelle nach Anspruch 1 oder 2,
**dadurch gekennzeichnet,**
**daß** das mindestens eine Versteifungselement (9) in Form einer Rippe, eines Steges, einer Strebe, einer Wand oder dergleichen ausgebildet ist.

4. Gegossene Kurbelwelle nach einem der vorhergehenden Ansprüche,
**dadurch gekennzeichnet,**
**daß** in dem Hohlraum (8) mehrere Versteifungselemente (9) vorgesehen sind.

5. Gegossene Kurbelwelle nach Anspruch 4,
**dadurch gekennzeichnet,**
**daß** Versteifungselemente (9) in den Bereichen von Kurbelwellen-Lagerzapfen (2) vorgesehen sind.

6. Gegossene Kurbelwelle nach Anspruch 4 oder 5,
**dadurch gekennzeichnet,**
**daß** Versteifungselemente (9) in den Bereichen von Pleuel-Lagerzapfen (3) vorgesehen sind.

7. Gegossene Kurbelwelle nach einem der Ansprüche 4 bis 6,
**dadurch gekennzeichnet,**
**daß** Versteifungselemente (9) in den Bereichen von Kurbelwangen (4) vorgesehen sind.

8. Gegossene Kurbelwelle nach einem der vorhergehenden Ansprüche,
**dadurch gekennzeichnet,**
**daß** es sich bei den Ölkanälen (5) um bei der Kurbelwellenherstellung eingegossene Hohlräume handelt.

9. Gegossene Kurbelwelle nach einem der Ansprüche 1 bis 7,
**dadurch gekennzeichnet,**
**daß** die Ölkanäle (5) in Form von bei der Kurbelwellenherstellung eingegossenen Röhrchen ausgebildet sind.

10. Gegossene Kurbelwelle nach einem der Ansprüche 1 bis 7,
**dadurch gekennzeichnet,**
**daß** die jeweils in einem Versteifungselement (9) verlaufenden Ölkanäle (5) nachträglich in die gegossene Kurbelwelle (1) eingebracht sind.

11. Gegossene Kurbelwelle nach einem der vorhergehenden Ansprüche,
**dadurch gekennzeichnet,**
**daß** in den Kurbelwangen (4) Öffnungen (11) ausgebildet sind.

12. Gegossene Kurbelwelle nach Anspruch 11,
**dadurch gekennzeichnet,**
**daß** die Öffnungen (11) in den Bereichen von Schwungmassen (4a) ausgebildet sind.

13. Verfahren zur Herstellung einer erfindungsgemäßen, im Lost Foam Verfahren hohlgegossenen Kurbelwelle (1) nach einem der Ansprüche 1 bis 12,
**dadurch gekennzeichnet,**
**daß** für das Gießen ein Schaumstoffmodell hergestellt wird, das in innerer und äußerer Form, Maß und Aufbau im wesentlichen der späteren gegossenen Kurbelwelle (1) entspricht, wobei das Schaumstoffmodell aus mehreren Segmenten zusammengesetzt wird und die Formen der Segmente derart gewählt werden, daß sich die Hohlraumform, die Art, Ausbildung und Anordnung des mindestens einen Versteifungselementes (9), der Verlauf der Ölkanäle (5) für die Lagerschmierung sowie - falls notwendig - gießtechnische Hilfsstrukturen (10, 11) genau vorgeben lassen.

14. Verfahren nach Anspruch 13,
**dadurch gekennzeichnet,**
**daß** das Schaumstoffmodell in Kurbelwellenlängserstreckung aus mehreren, hintereinander angeordneten Segmenten zusammengesetzt wird.

15. Verfahren nach Anspruch 13 oder 14,
**dadurch gekennzeichnet,**
**daß** für die späteren Ölkanäle (5) am Schaumstoffmodell Hohlräume ausgespart werden.

16. Verfahren nach Anspruch 15,
**dadurch gekennzeichnet,**
**daß** die späteren Ölkanäle (5) durch in das Schaumstoffmodell eingeformte Kerne mit hoher Biegefestigkeit eingebracht werden.

17. Verfahren nach Anspruch 13 oder 14,
**dadurch gekennzeichnet,**
**daß** für die späteren Ölkanäle (5) an entsprechenden Stellen in das Schaumstoffmodell Röhrchen eingearbeitet werden.

18. Verfahren nach Anspruch 13 oder 14,
**dadurch gekennzeichnet,**
**daß** die Ölkanäle (5) in die gegossene Kurbelwelle (1) eingebracht werden.

## Claims

1. A cast crankshaft with crankshaft journals (2), connecting rod journals (3), crank webs (4) and oil ducts (5) that in each case extend from the external circumference (6) of a crankshaft journal (2) to the external circumference (7) of a connecting rod journal (3) and that serve the purpose of lubricating the bearings, wherein the crankshaft (1) has been hollow cast in the lost foam process, and comprises a hollow space (8),
**characterised in that**
in the hollow space (8) at least one stiffening element (9) is provided in order to increase the mechanical stability under load, in particular the torsion- and bending resistance, of the crankshaft (1), wherein at least one stiffening element (9) forms a central stiffening element (9c), which in a hollow space (8) that extends through a crankshaft journal (2), crank webs (4) and a connecting rod journal (3) is made in one piece, and wherein an oil duct (5) extends in the central stiffening element (9c), of which there is at least one.

2. The cast crankshaft according to claim 1,
**characterised in that**
the stiffening element (9), of which there is at least one, is designed in one piece with the crankshaft (1).

3. The cast crankshaft according to claim 1 or 2,
**characterised in that**
the stiffening element (9), of which there is at least one, is designed as a rib, a web, a brace, a wall or the like.

4. The cast crankshaft according to one of the preceding claims,
**characterised in that**
several stiffening elements (9) are provided in the hollow space (8).

5. The cast crankshaft according to claim 4,
**characterised in that**
stiffening elements (9) are provided in the regions of crankshaft journals (2).

6. The cast crankshaft according to claim 4 or 5,
**characterised in that**
stiffening elements (9) are provided in the regions of connecting rod journals (3).

7. The cast crankshaft according to one of claims 4 to 6,
**characterised in that**
stiffening elements (9) are provided in the regions of crank webs (4).

8. The cast crankshaft, according to one of the preceding
claims,
**characterised in that**
the oil ducts (5) are hollow spaces that were cast-in at the time of production of the crankshaft.

9. The cast crankshaft according to one of claims 1 to 7,
**characterised in that**
the oil ducts (5) are designed in the form of tubes that were cast-in at the time of production of the crankshaft.

10. The cast crankshaft according to one of claims 1 to 7,
**characterised in that**
each of the oil ducts (5) that extends in a stiffening element (9) has been placed in the cast crankshaft (1) later on.

11. The cast crankshaft according to one or the preceding
claims,
**characterised in that**
the crank webs (4) comprise apertures (11).

12. The cast crankshaft according to claim 11,
**characterised in that**
the apertures (11) are formed in the regions of centrifugal masses (4a).

13. A method for producing a hollow cast crankshaft (1) according to the invention, which crankshaft (1) has been cast in the lost foam process, according to one of claims 1 to 12,
**characterised in that**
for casting, a foamed plastic pattern is produced whose external and internal form, dimension and structure essentially correspond to what will later become the cast crankshaft (1), wherein the foamed plastic pattern is composed of several segments, and the forms of the segments are selected such that the form of the hollow space, the type, design and arrangement of the stiffening element (9), of which there is at least one, the path of the oil ducts (5) for lubricating the bearings, as well as, if necessary, any auxiliary structures (10, 11) used in the casting process, can be precisely predetermined.

14. The method according to claim 13,
**characterised in that**
the foamed plastic model in longitudinal extension of the crankshaft is assembled of several segments, arranged one behind the other.

15. The method according to claim 13 or 14,
**characterised in that**
in order to form what will later become the oil ducts (5), hollow spaces are provided in the foamed plastic pattern.

16. The method according to claim 15,
**characterised in that**
in order to form what will later become the oil ducts (5), cores of considerable bending resistance are formed in the foamed plastic pattern.

17. The method according to claim 13 or 14,
**characterised in that**
in order to form what will later become the oil ducts (5), tubes are worked into the foamed plastic model at carresponding positions.

18. The method according to claim 13 or 14,
**characterised in that**
the oil ducts (5) are made in the cast crankshaft (1).

## Revendications

1. Vilebrequin coulé, avec des tourillons de vilebrequin (2), des tourillons de bielle (3), des flasques de manivelle (4) et des canalisations d'huile (5), qui s'étendent chacune de la périphérie (6) d'un tourillon de vilebrequin (2) vers la périphérie (7) d'un tourillon de bielle (3) et sont destinés à la lubrification des paliers, le vilebrequin (1) étant coulé creux par procédé de modèles fusibles et comportant une cavité (8),
**caractérisé en ce que**
dans la cavité (R), on a prévu au moins un élément de renfort (9), pour augmenter la capacité de charge mécanique, notamment la rigidité à la torsion et la rigidité à la flexion, du vilebrequin (1), au moins un élément de renfort (9) formant un élément de renfort central (9c), qui est conçu en continu dans une cavité (8) s'étendant sur un tourillon de vilebrequin (2), sur des flasques de manivelle (4) et sur un tourillon de bielle (4), et une canalisation d'huile (5) s'étendant dans le au moins un élément de renfort central (9c).

2. Vilebrequin coulé selon la revendication 1,
**caractérisé en ce que** le au moins un élément de renfort (9) est conçu en monobloc avec le vilebrequin (1).

3. Vilebrequin coulé selon la revendication 1 ou 2,
**caractérisé en ce que** le au moins un élément de renfort (9) est conçu sous la forme d'une nervure, d'un listel, d'une entretoise, d'une cloison ou similaires.

4. vilebrequin coulé selon l'une quelconque des revendications précédentes,
**caractérisé en ce qu'**on a prévu plusieurs éléments de renfort (9) dans la cavité (8).

5. Vilebrequin coulé selon la revendication 4,
**caractérisé en ce qu'**on a prévu des éléments de renfort (9) dans les zones de tourillons de vilebrequin (2).

6. vilebrequin coulé selon la revendication 4 ou 5,
**caractérisé en ce qu'**on a prévu des éléments de renfort (9) dans les zones de tourillons de bielle (3).

7. Vilebrequin coulé selon l'une quelconques des revendications 4 à 6,
**caractérisé en ce qu'**on a prévu des éléments de renfort (9) dans les zones de flasques de manivelle (4).

8. vilebrequin coulé selon l'une quelconque des revendications précédentes,
**caractérisé en ce que** les canalisations d'huile (5) sont des cavités scellées lors de la fabrication du vilebrequin.

9. vilebrequin coulé selon l'une quelconque des revendications 1 à 7,
**caractérisé en ce que** les canalisations d'huile (5) sont conçues sous la forme de tubes scellés lors de la fabrication du vilebrequin.

10. Vilebrequin coulé selon l'une quelconque des revendications 1 à 7,
**caractérisé en ce qu'**on ménage ultérieurement dans le vilebrequin coulé (1) les canalisations d'huile (5) s'étendant dans respectivement un élément de renfort (9).

11. Vilebrequin coulé selon l'une quelconque des revendications précédentes,
**caractérisé en ce que** des orifices (11) sont conçus dans les flasques de manivelle (4).

12. Vilebrequin coulé selon la revendication 11,
**caractérisé en ce que** des orifices (11) sont conçus dans les zones des masses d'équilibrage (4a).

13. Procédé de fabrication d'un vilebrequin (1) selon l'invention, fabriqué par procédé de modèles fusibles selon l'une quelconque des revendications 1 à 12,
**caractérisé en ce que** pour la coulée, on fabrique un modèle en mousse, qui au niveau de sa forme intérieure et extérieure, de ses dimensions et de sa structure, correspond sensiblement au vilebrequin (1) coulé ultëricurement, le modèle en mousse étant assemble en plusieurs segments et les formes des segments étant choisies de façon à ce que la forme de la cavité, le type, la conception et l'agencement du au moins un élément de renfort (9), le trajet des canalisations d'huile (5) pour la lubrification des paliers, ainsi que (si nécessaire) des structures auxiliaires pour la technique de coulée (10, 11) puissent être précisément prédéfinis.

14. Procédé selon la revendication 13,
**caractérisé en ce que** le modèle en mousse est assemblé en plusieurs segments disposés les uns derrière les autres dans le sens d'extension longitudinale du vilebrequin.

15. Procédé selon la revendication 13 ou 14,
**caractérisé en ce qu'**on évide des cavités sur le modèle en mousse, pour les canalisations d'huile (5) futures.

16. Procédé selon la revendication 15,
**caractérisé en ce qu'**on ménage les canalisations d'huiles futures (5) avec des noyaux à haute résistance à la flexion, scellés dans le modèle en mousse.

17. Procédé selon la revendication 13 ou 14,
**caractérisé en ce que** pour les canalisations d'huile futures (5), on incorpore des tubes dans des endroits correspondants du modèle en mousse.

18. Procédé selon la revendication 13 ou 14,
**caractérisé en ce qu'** on ménage les canalisations d'huile (5) dans le vilebrequin coulé (1).
